# EUROPEAN PATENT SPECIFICATION

(11) **EP 3 088 727 B1**
(45) Date of publication and mention of the grant of the patent: **22.08.2018**
(21) Application number: 14875656.2
(22) Date of filing: 24.12.2014
(51) Int. Cl.: F02M 63/00, F02B 23/02, F02B 25/04, F02M 51/00, F02M 21/02, F02D 19/06, F02D 19/10

(54) **UNIFLOW SCAVENGING 2-CYCLE ENGINE**
ZWEITAKTMOTOR MIT GLEICHSTROMSPÜLUNG
MOTEUR À DEUX TEMPS À BALAYAGE LONGITUDINAL

(30) Priority: 24.12.2013 JP 2013265944
(43) Date of publication of application: 02.11.2016
(73) Proprietor: IHI Corporation, Koto-ku Tokyo 135-8710 (JP)
(72) Inventor: MASUDA Yutaka, Tokyo 135-8710 (JP); YAMADA Takayuki, Tokyo 135-8710 (JP); KUGE Takahiro, Tokyo 135-8710 (JP); YAMADA Takeshi, Tokyo 135-8710 (JP)
(74) Representative: TBK
(86) International application number: PCT/JP2014/084162
(87) International publication number: WO 2015/098970

(56) References cited:
- EP-A1- 2 602 460
- JP-A- H07 208 171
- JP-A- 2005 291 181
- JP-A- 2009 526 169
- JP-A- 2012 036 780
- JP-A- 2012 154 188
- JP-A- 2012 154 189
- JP-A- 2013 040 579
- JP-A- 2013 040 579
- JP-U- S4 817 504

## Description

### [Technical Field]

The present invention relates to a uniflow scavenging 2-cycle engine that burns a premixed gas produced by injecting a fuel gas into an active gas sucked in from a scavenge port.

Priority is claimed on Japanese Patent Application No. 2013-265944, filed on December 24, 2013.

### [Background Art]

In uniflow scavenging 2-cycle engines (2-stroke engines) used as engines for ships, one end of a cylinder in a stroke direction of a piston is provided with an exhaust port, and the other end of the cylinder in the stroke direction of the piston is provided with a plurality of scavenge ports that are spaced apart in a circumferential direction of the cylinder. Also, a wall surface of the cylinder which is located between the scavenge ports and the exhaust port is provided with a plurality of fuel injection ports that inject a fuel gas and are spaced apart in the circumferential direction of the cylinder. Nozzles injecting the fuel gas are provided for the respective fuel injection ports.

Thus, when an active gas is sucked from the scavenge ports into a combustion chamber in an intake stroke, an exhaust gas generated by a combustion reaction is exhausted by the sucked active gas forcing it to be pushed out of the exhaust port. At this time, the fuel gas is injected from the nozzles into the sucked active gas to produce a premixed gas, and the produced premixed gas is compressed. Thereby, a combustion reaction is obtained, and the piston reciprocates in the cylinder due to an explosive pressure generated by this combustion reaction.

In addition, in JP H10-299578 A, a constitution in which, instead of a cylinder being provided with fuel injection ports, an inner wall of each scavenge port is provided with a nozzle injecting a fuel gas is described. In this constitution, before an active gas is sucked into the cylinder, mixture with the fuel gas is initiated, and thereby a time in which the fuel gas and the active gas are mixed in the cylinder is secured. As described above, in all of the constitutions in which the nozzles are arranged on the fuel injection ports provided for the cylinder and the constitution in which the nozzles are arranged on the scavenge ports, the plurality of nozzles are provided at intervals in a circumferential direction of the cylinder. Also, the same amount of fuel gas is injected from each of the nozzles without exception.

Further, a uniflow scavenging 2-cycle engine according to the preamble of claim 1 is known from JP 2013 040579 A.

### [Summary of Invention]

### [Technical Problem]

The flow rate of the active gas that flows from the scavenge ports into the cylinder differs depending on the positions of the scavenge ports. For this reason, when the same amount of fuel gas is injected from all of the nozzles without exception, the concentration of the fuel gas has a bias depending on circumferential positions of the cylinder. However, when injection valves provided for the individual nozzles are individually controlled in order to unify the concentration of the fuel gas, the control is complicated.

The present invention was conceived in view of the above circumstances, and thus an object of the present invention is to provide a uniflow scavenging 2-cycle engine in which a fuel gas can be uniformly diffused by simple injection control.

### [Solution to Problem]

A uniflow scavenging 2-cycle engine of the present invention includes: a cylinder in which a piston slides therein; a plurality of injection ports provided apart from each other in a circumferential direction of the cylinder; a fuel supply path configured to connect the plurality of injection ports to a fuel supply source of a fuel gas; a plurality of injection valves provided at the fuel supply path in parallel to each other, and which are configured to switch a communicating position at which the fuel supply source and the injection ports communicate with each other and the fuel gas supplied from the fuel supply source is ejected from the injection ports and a blocking position at which the communication between the fuel supply source and the injection ports is blocked and the ejection of the fuel gas from the injection ports is stopped, and thereby control the ejection of the fuel gas from the injection ports; a hydraulic pump configured to discharge hydraulic oil and thereby switches the injection valves to the communicating position or the blocking position; a main flow path connected to the hydraulic pump and configured to guide the hydraulic oil discharged from the hydraulic pump; a plurality of branch flow paths which branch off from the main flow path and configured to guide the hydraulic oil to one or more of the injection valves from the main flow path; and switching valves provided at the plurality of respective branch flow paths, configured to supply the hydraulic oil from the main flow path to the injection valves or to stop the supply of the hydraulic oil from the main flow path to the injection valves, and configured to switch the injection valves to the communicating position or the blocking position. Further, at least one of the plurality of branch flow paths is connected to one or more of the injection valves that control the ejection of the fuel gas from the plurality of injection ports adjacent to each other in a circumferential direction of the cylinder, and the ejection of the fuel gas from the plurality of injection ports adjacent to each other is controlled by switching one switching valve provided at one of the branch flow paths.

The injection ports may eject a premixed gas in which the fuel gas and an active gas are mixed.

The injection ports may be provided at different positions in a stroke direction of the piston. The ejection of the fuel gas from the plurality of injection ports adjacent to each other may be controlled by switching one switching valve provided at one of the branch flow paths, and the ejection of the fuel gas from the plurality of injection ports that have the different positions in the stroke direction of the piston and are adjacent to each other may be controlled by switching one switching valve provided at another of the branch flow paths.

The ejection of the fuel gas from the plurality of injection ports located in one section among the plurality of injection ports divided into the four sections in the circumferential direction of the cylinder may be controlled by the switching of one switching valve provided at one of the branch flow paths.

The uniflow scavenging 2-cycle engine of the present invention may further include a scavenge chamber in which the cylinder is disposed, and a communicating path configured to guide the active gas from a radial outer side of the scavenge chamber into the scavenge chamber.

The uniflow scavenging 2-cycle engine of the present invention may further include scavenge ports that are provided in the cylinder and extend in a direction inclined with respect to a radial direction of the cylinder to force the active gas to flow into the cylinder and to generate a spiral flow of the active gas in the cylinder. The injection ports may be provided in inner walls of the scavenge ports or outer sides of the scavenge ports, and the plurality of injection ports located in one section facing the communicating path may be disposed at a downstream side in a flow direction of the spiral flow in a greater number than at an upstream side in the flow direction of the spiral flow with respect to a center adjustment position of a flow path width of the communicating path.

### [Effects of Invention]

According to the uniflow scavenging 2-cycle engine of the present invention, the fuel gas can be uniformly diffused by simple injection control.

### [Brief Description of Drawings]

FIG. 1 is a view showing an entire constitution of a uniflow scavenging 2-cycle engine.
FIG. 2A is a view for explaining a fuel injection unit.
FIG. 2B is a view for explaining the fuel injection unit.
FIG. 3A is a view for explaining the structure of an injection valve.
FIG. 3B is a view for explaining the structure of the injection valve.
FIG. 4A is a view for explaining a hydraulic pressure system and the flow of a premixed gas.
FIG. 4B is a view for explaining the hydraulic pressure system and the flow of the premixed gas.
FIG. 5A is a view for explaining the flow of an active gas.
FIG. 5B is a view for explaining the flow of the active gas.
FIG. 6 is a view for explaining scavenge ports formed to extend in a radial direction of a cylinder.
FIG. 7 is a view showing an operation of each control unit.
FIG. 8A is a view for explaining a hydraulic pressure system and the flow of a premixed gas in a first modification of the present invention.
FIG. 8B is a view for explaining the hydraulic pressure system and the flow of the premixed gas in the first modification of the present invention.
FIG. 9A is a view for explaining a fuel injection unit in a second modification of the present invention.
FIG. 9B is a view for explaining the fuel injection unit in the second modification of the present invention.

### [Description of Embodiments]

Hereinafter, preferred embodiments of the present invention will be described in detail with reference to the attached drawings. Dimensions, materials, other specific numerical values, and so on. indicated in these embodiments are merely examples for facilitating comprehension of the invention, and unless indicated otherwise, the present invention is not limited thereto. Note that in the specification and drawings, elements having substantially the same functions and constitutions will be given the same reference signs, and duplicate description thereof will be omitted. Further, elements not directly related to the present invention are not shown in the drawings.

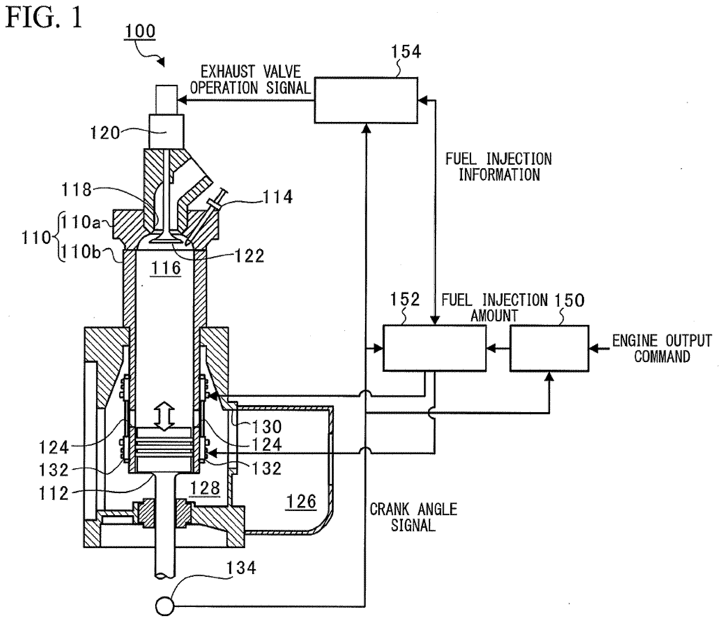

FIG. 1 is a view showing an entire constitution of a uniflow scavenging 2-cycle engine 100.

The uniflow scavenging 2-cycle engine 100 of the present embodiment is used in, for instance, a ship. To be specific, the uniflow scavenging 2-cycle engine 100 includes a cylinder 110 (a cylinder head 110a and a cylinder block 110b), a piston 112, a pilot injection valve 114, a combustion chamber 116, an exhaust port 118, an exhaust valve driving device 120, an exhaust valve 122, scavenge ports 124, a scavenge reservoir 126, a scavenge chamber 128, a communicating path 130, fuel injection units 132, and a rotary encoder 134, and is controlled by control units such as a governor (speed regulator) 150, a fuel injection control unit 152, and an exhaust control unit 154.

In the uniflow scavenging 2-cycle engine 100, exhaust, intake, compression, combustion, and expansion are performed between two strokes, upstroke and downstroke, of the piston 112, and the piston 112 coupled to a crosshead (not shown) slidably reciprocates in the cylinder 110. In this crosshead-type piston 112, relatively long strokes can be formed in the cylinder 110, and the crosshead can receive a lateral pressure acting on the piston 112. Thus, high output of the uniflow scavenging 2-cycle engine 100 can be achieved. Further, since the cylinder 110 and a crankcase (not shown) in which the crosshead is installed are isolated, even when low-grade fuel oil is used, staining and deterioration due to a lubricant in the crankcase can be prevented.

The pilot injection valve 114 is provided for the cylinder head 110a that is the one end of the cylinder 110 in the stroke direction and is higher than a top dead center of the piston 112, and injects an appropriate amount of fuel oil at a desired point in time in an engine cycle. This fuel oil is spontaneously ignited by heat of the combustion chamber 116 that is surrounded by the cylinder head 110a, a cylinder liner in the cylinder block 110b, and the piston 112, is burnt for a short time, and greatly increases the temperature of the combustion chamber 116. For this reason, a premixed gas including a fuel gas can be reliably burnt at a desired timing.

The exhaust port 118 is an opening that is provided at one end side in the stroke direction of the piston 112 in the cylinder 110, i.e., in a top portion of the cylinder head 110a which is higher than the top dead center of the piston 112, and is opened/closed to exhaust exhaust gas generated in the cylinder 110 after combustion.

The exhaust valve driving device 120 forces the exhaust valve 122 to slide up and down under the control of the exhaust control unit 154 at a predetermined timing, and opens/closes the exhaust port 118.

The plurality of scavenge ports 124 are holes that pass through the cylinder block 110b from an inner circumferential surface to an outer circumferential surface at the other end in the stroke direction of the piston 112 in the cylinder 110, and are provided throughout the circumference of the cylinder 110 at a distance from each other.

Thus, an active gas is sucked from the scavenge ports 124 into the cylinder 110 depending on the sliding of the piston 112. This active gas includes an oxidant such as oxygen, ozone, or a mixture thereof (e.g., air). The active gas (e.g., air) pressurized by a compressor of a supercharger (not shown) is encapsulated in the scavenge reservoir 126, and the scavenge chamber 128 in which the cylinder 110 is housed and the scavenge reservoir 126 are spatially connected by the communicating path 130. The communicating path 130 guides the active gas from the scavenge reservoir 126, which is located outside in a radial direction of the scavenge chamber 128, to the scavenge chamber 128.

The active gas flowing into the scavenge chamber 128 is sucked from the scavenge ports 124 into the cylinder 110 by a pressure difference between the scavenge chamber 128 and the cylinder 110. The pressure of the scavenge reservoir 126 can be made nearly constant. However, when the pressure of the scavenge reservoir 126 varies, by providing pressure gauges at the scavenge ports 124, other parameters such as the amount of the fuel gas injected may be controlled according to the measured values of the pressure gauges.

The fuel injection units 132 are disposed outside in a radial direction of the scavenge ports 124, eject the fuel gas, and cause the ejected fuel gas to flow from the scavenge ports 124 into the cylinder 110. The fuel injection units 132 are described below.

The rotary encoder 134 is provided for a crank mechanism (not shown), and detects an angle signal of a crank (hereinafter, referred to as "crank angle signal").

The governor 150 derives a fuel injection amount on the basis of an engine output command value input from a host control unit and an engine rotating speed caused by the crank angle signal from the rotary encoder 134, and outputs it to the fuel injection control unit 152.

The fuel injection control unit 152 controls a switching valve (to be described below) on the basis of information indicating the fuel injection amount input from the governor 150 and the crank angle signal from the rotary encoder 134.

The exhaust control unit 154 outputs an exhaust valve operating signal to the exhaust valve driving device 120 on the basis of a signal associated with the fuel injection amount input from the fuel injection control unit 152 and the crank angle signal from the rotary encoder 134.

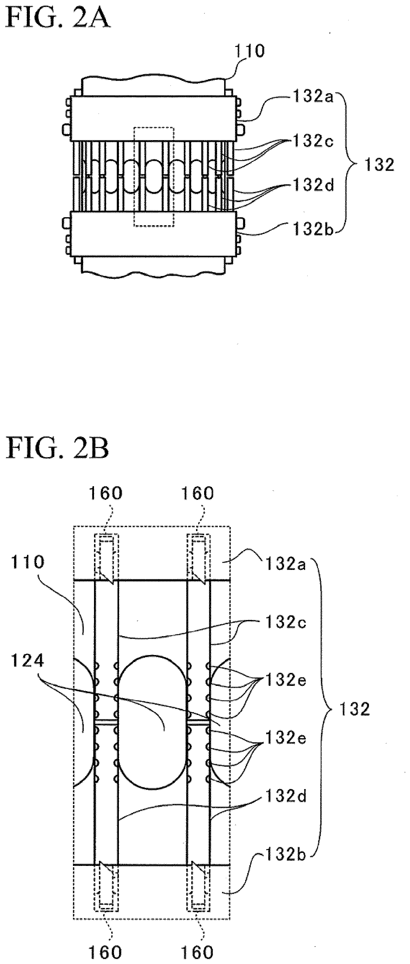

FIGS. 2A and 2B are views for explaining the fuel injection units 132. In FIG. 2A, the vicinities of the fuel injection units 132 are extracted and shown from a side view of the cylinder 110. Further, in FIG. 2B, an enlarged view of a portion of a broken line of FIG. 2A is shown.

As shown in FIG. 2A, each of the fuel injection units 132 has storage tubes 132a and 132b formed independently of the cylinder 110. Each of the storage tubes 132a and 132b is an annular member that surrounds a radial outer side of the cylinder 110 in a circumferential direction. The storage tube 132a is disposed at one end side (an upper side of FIG. 2A) in the stroke direction of the piston 112 in relation to the scavenge ports 124, and the storage tube 132b is disposed at the other end side (a lower side of FIG. 2A) in the stroke direction of the piston 112 in relation to the scavenge ports 124.

Annular storage chambers are formed in the respective storage tubes 132a and 132b. The fuel gas is temporarily stored in the storage chambers. Here, the fuel gas is not limited to liquefied natural gas (LNG), and for example, a gasified material such as liquefied petroleum gas (LPG), gas oil, and heavy oil may be applied as the fuel gas.

Circulation tubes 132c and 132d are arranged in series between the storage tube 132a and the storage tube 132b. One ends of the circulation tubes 132c and 132d are disposed opposite to each other. The other end of each of the circulation tubes 132c is fixed to the storage tube 132a, and the other end of each of the circulation tubes 132d is fixed to the storage tube 132b.

The circulation tubes 132c communicate with the storage tube 132a, and the fuel gas flowing in from the storage tube 132a circulates therein. Further, the circulation tubes 132d communicate with the storage tube 132b, and the fuel gas flowing in from the storage tube 132b circulates therein. In this way, in the circulation tubes 132c and 132d, flow paths independent of each other are formed.

As shown in FIG. 2B, the circulation tubes 132c and 132d are formed with injection ports 132e. The injection ports 132e are holes by which inner and outer circumferential surfaces of the circulation tubes 132c and 132d communicate with each other. Therefore, the injection ports 132e are located at a radial outer side of the cylinder 110 (an outer side of the cylinder 110) between the neighboring scavenge ports 124. Also, the injection ports 132e are provided apart from each other in the circumferential direction of the cylinder 110, and are open from the circulation tubes 132c and 132d in the circumferential direction of the cylinder 110.

Injection valves 160 are provided in the respective storage tubes 132a and 132b. The communicating portions between the storage tube 132a and the circulation tubes 132c are opened/closed by the injection valves 160 provided in the storage tube 132a. Also, the communicating portions between the storage tube 132b and the circulation tubes 132d are opened/closed by the injection valves 160 provided in the storage tube 132b.

When the injection valves 160 are opened and the fuel gas flows from the storage tubes 132a and 132b into the circulation tubes 132c and 132d, the fuel gas is ejected from the injection ports 132e. Thus, the fuel gas is sprayed from the injection ports 132e of the fuel injection units 132 toward the active gas that flows from the scavenge reservoir 126 (the scavenge chamber 128) toward the scavenge ports 124. At this time, an eddy current occurs at the active gas in the vicinity of the scavenge ports 124, and mixture of the active gas and the fuel gas can be accelerated by the eddy current.

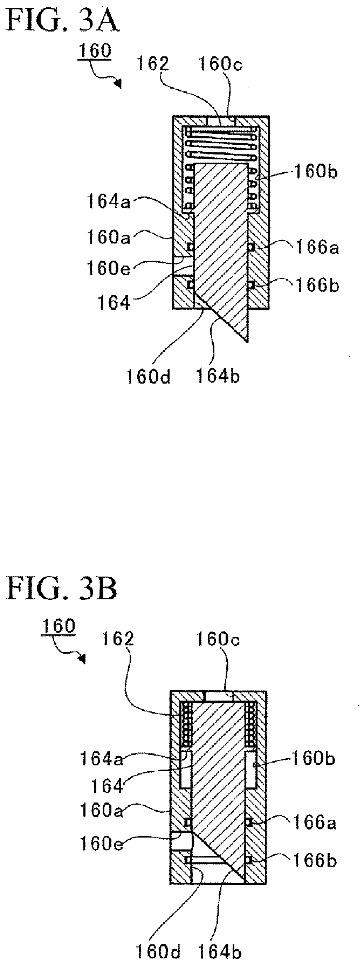

FIGS. 3A and 3B are views for explaining a structure of the injection valve 160. In FIG. 3A, the injection valve 160 when it is at a blocking position at which the ejection of the fuel gas from the injection ports 132e is stopped is shown. In FIG. 3B, the injection valve 160 when it is at a communicating position at which the fuel gas is ejected from the injection ports 132e is shown.

The injection valve 160 provided for the communicating portion between each of the circulation tubes 132c and the storage tube 132a and the injection valve 160 provided for the communicating portion between each of the circulation tubes 132d and the storage tube 132b are symmetrical with respect to each other, but have substantially the same constitution. For this reason, the injection valve 160 provided for the communicating portion between each of the circulation tubes 132c and the storage tube 132a shown in FIG. 2B will be described by way of example, and the injection valve 160 provided for the communicating portion between each of the circulation tubes 132d and the storage tube 132b shown in FIG. 2B will not be described.

As shown in FIGS. 3A and 3B, the injection valve 160 is configured to include a main body 160a. The main body 160a of the injection valve 160 is a tubular member, and in each of the figures, a lower end thereof blocks the communicating portion between the storage tube 132a and each of the circulation tubes 132c.

In the main body 160a of the injection valve 160, a spring chamber 160b is formed, and an elastic member 162 formed of a spring is disposed. Also, in the main body 160a, an oil hole 160c passing from the spring chamber 160b to an upper side in each of the figures is formed. A hydraulic hose (not shown) communicating with a hydraulic pump (to be described below) is connected to the oil hole 160c.

In the main body 160a, a through-hole 160d passing from the spring chamber 160b to a lower side in each of the figures is formed, and a transverse hole 160e is formed at the lower side in each of the figures in relation to the spring chamber 160b. The transverse hole 160e passes through a lateral portion of the main body 160a from an outer circumferential surface of the main body 160a to the through-hole 160d in a radial direction. As described above, the injection valve 160 is disposed in the storage tube 132a. Therefore, the fuel gas with which the storage tube 132a is filled flows into the transverse hole 160e. Also, the through-hole 160d of the injection valve 160 communicates with each of the circulation tubes 132c at a lower end of each of the figures.

A valve element 164 is a columnar member, and is inserted into the spring chamber 160b and the through-hole 160d. Further, the valve element 164 has a protrusion 164a that protrudes to a radial outer side on a region located in the spring chamber 160b. One end of the valve element 164 which is located at the upper side in each of the figures is parallel to a surface perpendicular to an axis of the valve element 164, and the other end of the valve element 164 which is located at a lower side has a tapered surface 164b that is inclined with respect to the surface perpendicular to the axis of the valve element 164.

Both ends of the elastic member 162 are fixed to the protrusion 164a and an inner wall of the spring chamber 160b which is located at the upper side in each of the figures. The elastic member 162 functions as a tension spring, and applies a biasing force to the protrusion 164a in a direction in which the elastic member 162 is contracted, i.e., toward the upper side in each of the figures.

When a hydraulic pressure is applied to the valve element 164 by hydraulic oil flowing from the oil hole 160c into the main body 160a of the injection valves 160, the valve element 164 is, as shown in FIG. 3A, pressed by the hydraulic pressure, and is displaced to the lower side of the figure in relation to the main body 160a. At this time, the transverse hole 160e is blocked by the valve element 164.

Seal rings 166a and 166b are provided on upper and lower sides, respectively, of the through-hole 160d in each of the figures with the transverse hole 160e sandwiched therebetween. The seal rings 166a and 166b seal a gap between the main body 160a and the valve element 164 such that the fuel gas flowing into the transverse hole 160e does not leak from the gap between the main body 160a and the valve element 164 toward the spring chamber 160b or the tapered surface 164b.

When no hydraulic pressure is applied to the valve element 164, the valve element 164 is, as shown in FIG. 3B, displaced to the upper side of the figure in relation to the main body 160a by the biasing force of the elastic member 162. As a result, the transverse hole 160e and the through-hole 160d communicate with each other, and the fuel gas with which the storage tube 132a is filled flows from the transverse hole 160e into the through-hole 160d.

Thus, the fuel gas is guided to an inner wall of the through-hole 160d and the tapered surface 164b of the valve element 164, flows from the through-hole 160d to the lower side in each of the figures, and flows into the circulation tubes 132c. Thereby, the fuel gas is ejected from the injection ports 132e of the circulation tubes 132c to the outside of the scavenge ports 124.

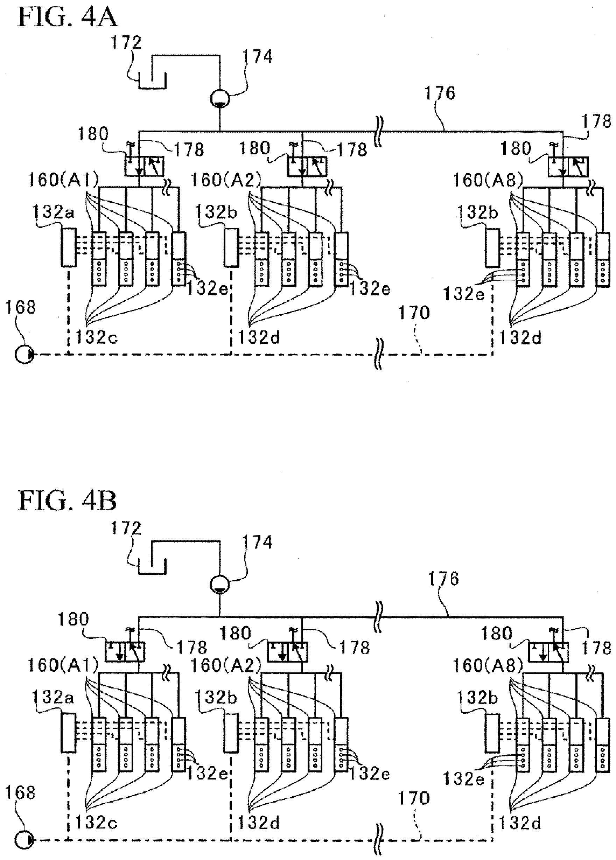

FIGS. 4A and 4B are views for explaining a hydraulic pressure system and a flow of the fuel gas. In FIG. 4A, a supplied state in which the hydraulic oil is supplied to the injection valves 160 is shown. In FIG. 4B, a stopped state in which the supply of the hydraulic oil to the injection valves 160 is stopped is shown. In FIGS. 4A and 4B, the flow of the hydraulic oil is indicated by a solid line, and the flow of the fuel gas is indicated by an alternate long and short dash line or a broken line. A fuel supply source 168 shown in FIGS. 4A and 4B is formed of, for instance, a fuel pump that pumps the fuel gas from a fuel tank in which the fuel gas is stored.

Further, a fuel supply path 170 is a flow path of the fuel gas which is configured to include the storage tubes 132a and 132b and the circulation tubes 132c and 132d of the fuel injection units 132. Thus, the fuel supply path 170 connects the aforementioned plurality of injection ports 132e of the fuel injection units 132 in parallel to the fuel supply source 168. Also, the injection valves 160 are provided parallel to each other in correspondence with the circulation tubes 132c and 132d on the fuel supply path 170.

Here, while not shown, an active gas supply path of the fuel supply path 170, to which the active gas is supplied, communicates with the storage tubes 132a and 132b, and the active gas from the active gas supply path and the fuel gas from the fuel supply source 168 are mixed in the storage tubes 132a and 132b.

At the aforementioned communicating position, the injection valves 160 cause the fuel supply source 168 and the injection ports 132e to communicate with each other, and force the fuel gas supplied from the fuel supply source 168 to be ejected from the injection ports 132e. Also, at the blocking position, the injection valves 160 block the communication between the fuel supply source 168 and the injection ports 132e, and stop the ejection of the fuel gas from the injection ports 132e.

Hydraulic oil for switching each of the injection valves 160 to the communicating position or the blocking position is stored in the storage tank 172. A hydraulic pump 174 sucks and discharges the hydraulic oil from the storage tank 172. A main flow path 176 is connected to the hydraulic pump 174, and the hydraulic oil discharged from the hydraulic pump 174 is guided thereto. A plurality of branch flow paths 178 are flow paths that branch off from the main flow path 176, and are, for example, configured to include hydraulic hoses connected to the oil holes 160c in the main bodies 160a of the aforementioned injection valves 160. Each of the branch flow paths 178 guides the hydraulic oil from the main flow path 176 to the individual injection valves 160.

That is, the hydraulic oil discharged from the hydraulic pump 174 is guided to the oil holes 160c of the main bodies 160a of the individual injection valves 160 via the main flow path 176 and the branch flow paths 178.

Switching valves 180 are each formed of, for instance, a three-port solenoid valve, and are provided for the plurality of branch flow paths 178, respectively. The switching valves 180 respond to the control of the fuel injection control unit 152, and are displaced to a supply position at which the hydraulic oil is supplied from the main flow path 176 to the injection valves 160 as shown in FIG. 4A or a stop position at which the supply of the hydraulic oil from the main flow path 176 to the injection valves 160 is stopped as shown in FIG. 4B.

As shown in FIG. 4A, when the switching valves 180 occupy the supply position, the hydraulic pressure acts on the valve elements 164 as described above, and the injection valves 160 occupy the blocking position (see FIG. 3A). On the other hand, as shown in FIG. 4B, when the switching valves 180 occupy the stop position, the hydraulic pressure does not act on the valve elements 164, and the injection valves 160 occupy the communicating position (see FIG. 3B).

As shown in FIG. 4B, at the stop position, the switching valves 180 block communication between the main flow path 176 and the oil holes 160c of the injection valves 160, cause the oil holes 160c of the injection valves 160 and the storage tank 172 to communicate with each other, and cause the hydraulic oil in the spring chambers 160b to flow back to the storage tank 172. Thereby, no hydraulic pressure acts on the injection valves 160. In this way, the switching valves 180 switch the injection valves 160 between the communicating position and the blocking position.

As shown in FIGS. 4A and 4B, one branch flow path 178 is connected to the plurality of injection valves 160. In the present embodiment, for example, seven injection valves 160 are connected with one branch flow path 178. For example, eight branch flow paths 178 are provided, and the plurality of injection valves 160 connected to one branch flow path 178 are referred to as one of valve groups A (in FIGS. 4A and 4B, the valve groups are indicated by A1, A2, and A8, and A3 to A7 are not shown).

Since one switching valve 180 is provided for each of the branch flow paths 178, one of the valve groups A is opened/closed all together by switching one switching valve 180.

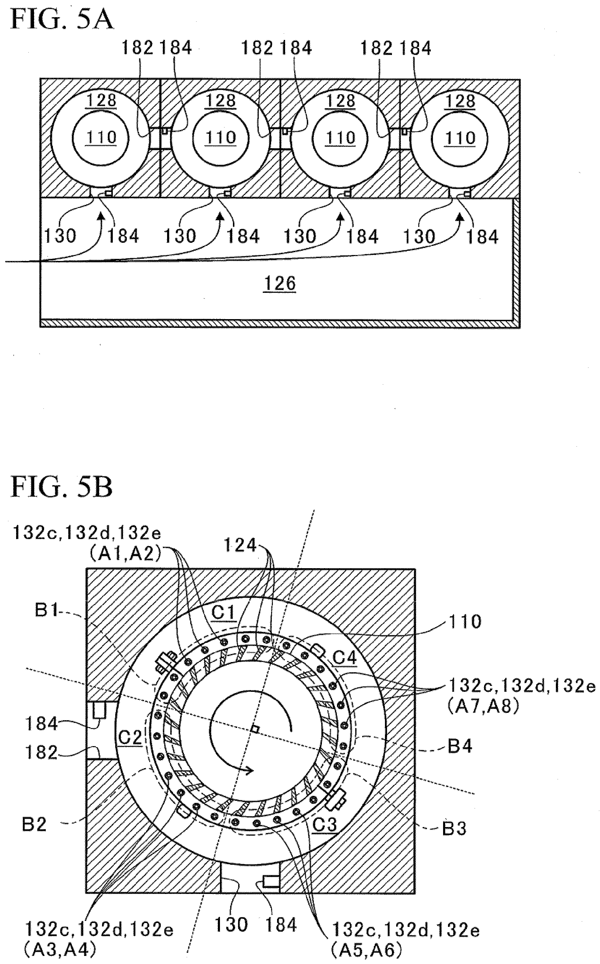

FIGS. 5A and 5B are views for explaining a flow of the active gas. In FIG. 5A, a sectional view taken along a plane perpendicular to the stroke direction of the pistons 112 with respect to the scavenge reservoir 126 and the scavenge chambers 128 is shown. In FIG. 5B, an enlarged view of the scavenge chamber 128 and the cylinder 110 located at a right end in FIG. 5A is shown. In FIG. 5A, details of cross sections of the cylinders 110 are omitted.

As shown in FIG. 5A, the uniflow scavenging 2-cycle engine 100 is, for instance, a four-cylinder engine in which the cylinders 110 are disposed in the four scavenge chambers 128 arranged in parallel. Each of the cylinders 110 is provided with the aforementioned constitutions such as the piston 112, the exhaust valve 122, and the fuel injection units 132.

The neighboring scavenge chambers 128 are spatially connected to each other by a connecting path 182. The active gas flows into the scavenge chambers 128 from the communicating paths 130, and from the connecting paths 182.

The communicating path 130 and the connecting path 182 are provided with flowmeters 184, each of which measures the flow rate of the flowing active gas. The flowmeter 184 may have a constitution capable of specifying, for instance, even the direction of the flow of the active gas. Even if the flowmeter 184 cannot even specify the direction of the flow of the active gas, the fuel injection control unit 152 may decide the direction of the flow of the active gas on the basis of a scavenge timing for each of the cylinders 110.

As shown in FIG. 5B, the circulation tubes 132c and 132d are divided into four sections B1 to B4 in the circumferential direction of the cylinder 110. Thus, the injection ports 132e provided for each of the circulation tubes 132c and 132d are divided into the four sections B1 to B4 to which the circulation tubes 132c and 132d belong.

Among the injection ports 132e belonging to the section B1, some injection ports 132e provided for the circulation tubes 132c are configured such that the ejection of the fuel gas is controlled by the valve group A1. Among the injection ports 132e belonging to the section B1, the other injection ports 132e provided for the circulation tubes 132d are configured such that the ejection of the fuel gas is controlled by the valve group A2.

Among the injection ports 132e belonging to the section B2, some injection ports 132e provided for the circulation tubes 132c are configured such that the ejection of the fuel gas is controlled by the valve group A3. Among the injection ports 132e belonging to the section B2, the other injection ports 132e provided for the circulation tubes 132d are configured such that the ejection of the fuel gas is controlled by the valve group A4.

Among the injection ports 132e belonging to the section B3, some injection ports 132e provided for the circulation tubes 132c are configured such that the ejection of the fuel gas is controlled by the valve group A5. Among the injection ports 132e belonging to the section B3, the other injection ports 132e provided for the circulation tubes 132d are configured such that the ejection of the fuel gas is controlled by the valve group A6.

Among the injection ports 132e belonging to the section B4, some injection ports 132e provided for the circulation tubes 132c are configured such that the ejection of the fuel gas is controlled by the valve group A7. Among the injection ports 132e belonging to the section B4, the other injection ports 132e provided for the circulation tubes 132d are configured such that the ejection of the fuel gas is controlled by the valve group A8.

That is, the ejection of the fuel gas from the injection ports 132e, which are provided for either the circulation tubes 132c or the circulation tubes 132d that are located at one section, among the plurality of injection ports 132e that are divided into the four sections in the circumferential direction of the cylinder 110, is controlled by one of the switching valves 180 provided for the branch flow paths 178.

The active gas flowing into the scavenge chamber 128 is likely to have a high pressure and a high flow rate flowing from the scavenge ports 124 in the vicinity of the communicating path 130 or the connecting path 182. For this reason, when the same amount of fuel gas is ejected from all of the injection ports 132e without exception, the concentration of the fuel gas becomes lower near the scavenge ports 124 at which an inflow amount of the active gas is great, and the concentration of the fuel gas becomes higher near the scavenge ports 124 at which the inflow amount of the active gas is small.

Pressure distribution of the active gas in the scavenge chamber 128 may be estimated from, for instance, a measured value of the flowmeter 184. Thus, a switching timing of the switching valve 180 is previously set in association with the measured value of the flowmeter 184 such that the fuel gas corresponding to the inflow amount of the active gas of each of the scavenge ports 124 is ejected. The fuel injection control unit 152 controls the switching valve 180 on the basis of the measured value of the flowmeter 184 and the preset switching timing of the switching valve 180.

To be specific, at the injection ports 132e in the vicinity of the scavenge port 124 for which it is estimated that the pressure of the active gas is high and that the inflow amount of the active gas is great, the fuel injection control unit 152 increases the ejection amount of the fuel gas from the injection ports 132e by opening the injection valves 160 for a long period of time. On the other hand, at the injection ports 132e in the vicinity of the scavenge port 124 for which it is estimated that the pressure of the active gas is low and that the inflow amount of the active gas is small, the fuel injection control unit 152 reduces the ejection amount of the fuel gas from the injection ports 132e by opening the injection valves 160 for a short period of time.

As described above, one of the valve groups A can be opened/closed all together by switching one switching valve 180. It is possible to restrain a deviation in the concentration of the fuel gas and to uniformly diffuse the fuel gas while easily performing the injection control of the fuel gas.

Also, the inside of the scavenge chamber 128 is divided into four regions C1 to C4 in which the pressure of the active gas is similar in the circumferential direction of the cylinder 110. For this reason, the valve groups A are constituted by dividing the injection ports 132e into four groups in the circumferential direction of the cylinder 110. Thereby, the fuel gas can be efficiently diffused under the control of a few switching valves 180.

In addition, as shown in FIG. 5B, the scavenge ports 124 extend in a direction inclined with respect to the radial direction of the cylinder 110 to generate a spiral flow (swirl) of the active gas in the cylinder 110. In other words, the scavenge ports 124 serve as flow paths directed to positions shifted from the radial center of the cylinder 110. In FIG. 5B, a flow direction of the spiral flow is indicated by an arrow.

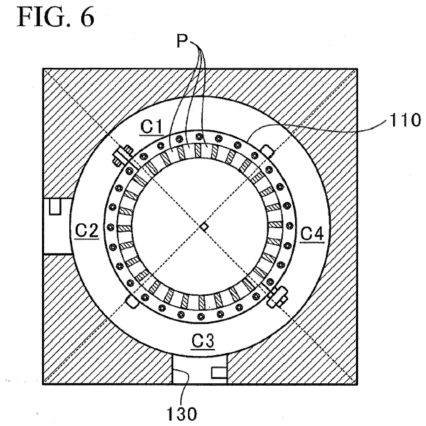

FIG. 6 is a view for explaining the scavenge ports P that are formed to extend in the radial direction of the cylinder 110. In the constitution shown in FIG. 6, regions in which the pressure of the active gas is similar in the cylinder 110 are formed like the regions C1 to C4. For example, the region C3 is nearly evenly present at not only a clockwise side but also a counter clockwise side centering on the communicating path 130 in the circumferential direction of the cylinder 110.

On the other hand, as shown in FIG. 5B, when the scavenge ports 124 are formed to generate the spiral flow, the regions C1 to C4 in which the pressure of the active gas is similar are further shifted in the circumferential direction of the cylinder 110 than the positions shown in FIG. 6.

Thus, in the present embodiment, one section (the section B3 in the example shown in FIG. 5B) facing the communicating path 130 is configured to be present at a downstream side (a counterclockwise side) in the flow direction of the spiral flow to be longer (wider) than an upstream side (a clockwise side) in the flow direction of the spiral flow with respect to the communicating path 130. That is, the section B3 is divided such that the injection ports 132e with which a plurality of (here, seven) circulation tubes 132c and 132d located in one section facing the communicating path 130 are provided are disposed at the downstream side (the counterclockwise side) in the flow direction of the spiral flow in a greater number than at the upstream side (the clockwise side) in the flow direction of the spiral flow with respect to a central position of a flow path width of the communicating path 130. In this way, according to the pressure distribution of the active gas, the injection ports 132e are divided, and the valve group A located in the same section is controlled. Thereby, the fuel gas corresponding to the flow rate of the active gas flowing into the scavenge ports 124 can be appropriately ejected.

Hereinafter, an operation of each control unit in an engine cycle of the aforementioned uniflow scavenging 2-cycle engine 100 will be described.

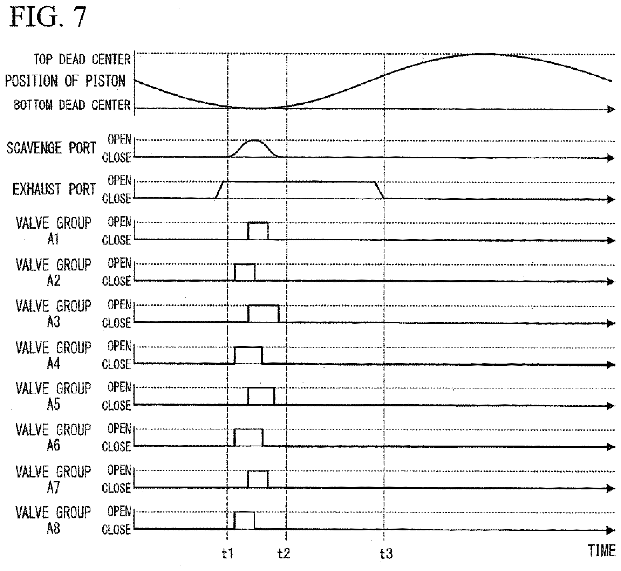

FIG. 7 is a view showing an operation of each control unit. As shown in FIG. 7, in an exhaust stroke after a combustion stroke, the exhaust port 118 and the scavenge ports 124 are in a blocked state, and the combustion chamber 116 (the inside of the cylinder 110) is filled with an exhaust gas.

When the piston 112 is lowered to approach a bottom dead center by an explosive pressure generated by a combustion reaction of the combustion chamber 116, the exhaust control unit 154 opens the exhaust valve 122 through the exhaust valve driving device 120, and then the scavenge ports 124 are opened in response to a sliding motion of the piston 112 (t1 shown in FIG. 7). Then, an active gas is sucked from the scavenge ports 124.

Then, the fuel injection control unit 152 injects a fuel gas from the fuel injection units 132 at a radial outer side of the cylinder 110 in the scavenge ports 124 on the basis of information indicating a fuel injection amount input from the governor 150 and an engine rotating speed derived by the crank angle signal from the rotary encoder 134. Thereby, the fuel gas is included in the active gas before the active gas is sucked into the scavenge ports 124.

At this time, the fuel injection control unit 152 individually controls the plurality of switching valves 180 on the basis of a measured value of the flowmeter 184, opens the valve groups A1 to A8, and ejects the fuel gas. Then, the fuel injection control unit 152 individually controls the plurality of switching valves 180, closes the valve groups A1 to A8, and stops the ejection of the fuel gas.

At this time, the ejection of the fuel gas from the plurality of neighboring injection ports 132e that are provided for the circulation tubes 132d is controlled by switching of the valve groups A2, A4, A6 and A8. Also, the ejection of the fuel gas from the plurality of neighboring injection ports 132e that are provided for the circulation tubes 132c and have different positions in the stroke direction of the piston 112 is controlled by switching of the valve groups A1, A3, A5 and A7 provided for the other branch flow paths 178.

In addition, the valve groups A2, A4, A6 and A8 that control the ejection of the fuel gas from the injection ports 132e provided for the circulation tubes 132d have faster valve opening and closing timings than the valve groups A1, A3, A5 and A7 that control the ejection of the fuel gas from the injection ports 132e provided for the circulation tubes 132c.

For this reason, the ejection of the fuel gas is stopped according to a timing at which the scavenge ports 124 are gradually blocked by the piston 112. Like the injection ports 132e provided for the circulation tubes 132c and the injection ports 132e provided for the circulation tubes 132d, the valve groups A are separately configured with respect to the injection ports 132e having the different positions in the stroke direction of the piston 112, and thereby appropriate injection control corresponding to the positions in the stroke direction of the piston 112 is possible.

Also, the valve groups A3 to A6 that control the ejection of the fuel gas from the injection ports 132e adjacent to the communicating path 130 or the connecting path 182 have a longer valve opening period than the other valve groups A1, A2, A7 and A8. For this reason, more of the fuel gas can be ejected from the injection ports 132e which are adjacent to the communicating path 130 or the connecting path 182 and for which it is estimated that the flow rate of the active gas is great than from the injection ports 132e adjacent to the scavenge ports 124 which are separated from the communicating path 130 or the connecting path 182 and for which it is estimated that the flow rate of the active gas is small, and the concentration of the fuel gas can be made even.

However, the switching timings of the valve groups A shown in FIG. 7 are merely one example. Since the pressure distribution in the scavenge chamber 128 is affected by, for instance, scavenging of other neighboring cylinders 110, control different from the control of the valve groups A shown in FIG. 7 may also be performed.

Afterwards, the active gas and the fuel gas are raised while forming a swirl for facilitating mixture of the active gas and the fuel gas, and the exhaust gas of the combustion chamber 116 (the inside of the cylinder 110) is pushed out of the exhaust port 118.

Then, in the combustion stroke in which the piston 112 is raised from the bottom dead center toward the top dead center, the scavenge ports 124 are blocked, and the suction of the active gas is stopped (t2 shown in FIG. 7). At this time, the exhaust control unit 154 maintains the exhaust valve 122 in a valve opened state, and the exhaust gas of the combustion chamber 116 (the inside of the cylinder 110) is continuously discharged from the exhaust port 118 by the rise of the piston 112.

Further, when the piston 112 is raised, the exhaust control unit 154 closes the exhaust valve 122 to block the exhaust port 118 (t3 shown in FIG. 7). Then, explosion is generated by the combustion reaction in the combustion chamber 116.

As the fuel gas is burnt in the combustion chamber 116 in this way, the exhaust, intake, compression, combustion, and expansion strokes are repeated as described above.

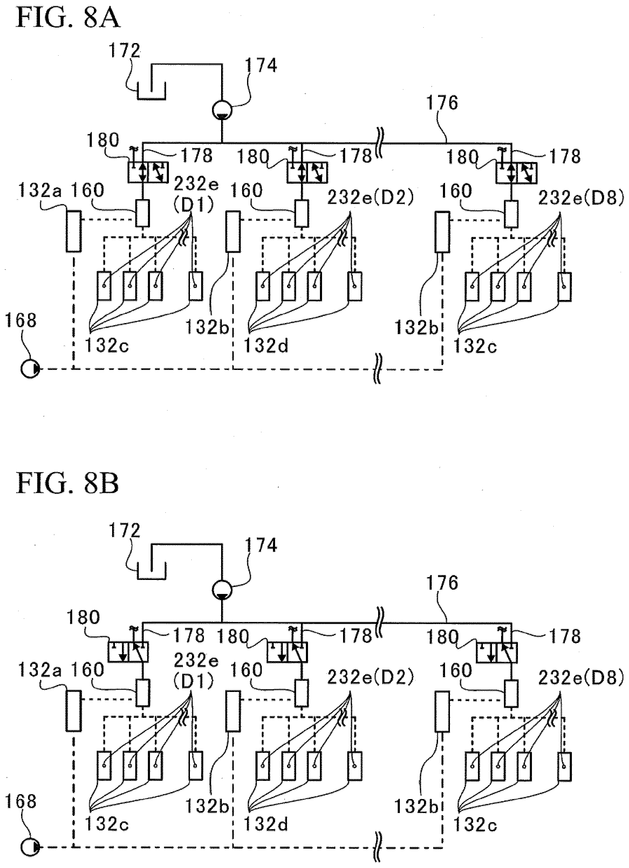

FIGS. 8A and 8B are views for explaining a hydraulic pressure system and a flow of a premixed gas in a first modification of the present invention. In the aforementioned embodiment, the constitution in which the injection valves 160 control the ejection of the premixed gas from the injection ports 132e provided for either the circulation tubes 132c or the circulation tubes 132d has been described. Thus, in the aforementioned embodiment, as shown in FIG. 2B, the plurality of injection ports 132e are provided for the circulation tubes 132c at the different positions in the stroke direction of the piston 112, and are provided for the circulation tubes 132d at the different positions in the stroke direction of the piston 112.

In the first modification, a plurality of injection ports 232e that have the same positions in the stroke direction of the piston 112 and are adjacent to each other in a circumferential direction of a cylinder 110 are connected to one injection valve 160. For example, eight branch flow paths 178 are provided, and one branch flow path 178 is connected to an oil hole 160c of one injection valve 160. Thus, the injection ports 232e are classified into eight injection port groups D (in FIGS. 8A and 8B, the injection port groups are indicated by D1, D2 and D8, and D3 to D7 are not shown) for each of the connected injection valves 160.

Thus, opening/closing of one injection valve 160 is controlled by switching of one switching valve 180 provided for the branch flow path 178. One injection valve 160 controls ejection of a premixed gas from one of the injection port groups D.

That is, one injection valve 160 is configured to control the ejection of the premixed gas from one (of the plurality of injection ports 232e adjacent to each other in the circumferential direction of the cylinder 110) of the injection port groups D by switching one switching valve 180. For this reason, similar to the aforementioned embodiment, it is possible to restrain a deviation in concentration of the fuel gas and to uniformly diffuse the fuel gas while easily performing injection control of the fuel gas.

In the aforementioned embodiment and the first modification, the case in which the fuel gas prior to the mixture with the active gas is ejected from the fuel injection units 132 has been described. However, the fuel gas and the active gas may be previously mixed in the fuel injection units. Hereinafter, these fuel injection units 332 will be described.

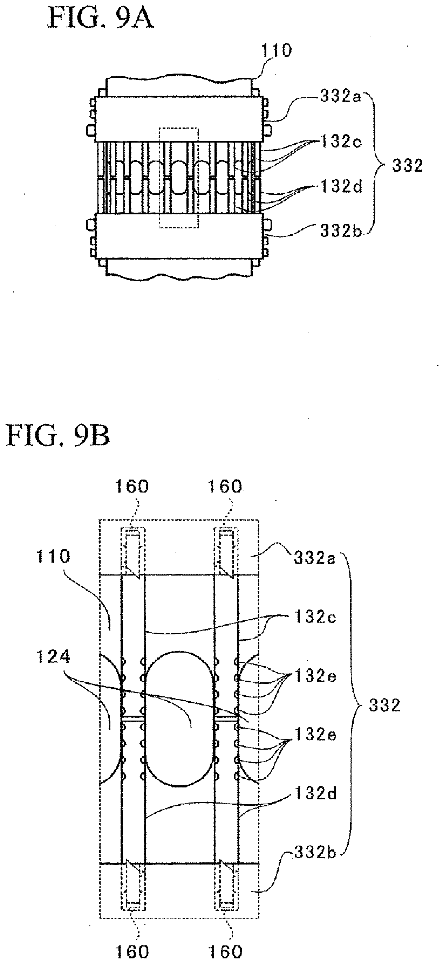

FIGS. 9A and 9B are views for explaining the fuel injection units 332 in a second modification of the present invention. In FIG. 9A, the vicinities of the fuel injection units 332 are extracted and shown from a side view of a cylinder 110. Further, in FIG. 9B, an enlarged view of a portion of a broken line of FIG. 9A is shown.

As shown in FIG. 9A, each of the fuel injection units 332 has mixing tubes 332a and 332b that are formed independently of the cylinder 110. Each of the mixing tubes 332a and 332b is an annular member that surrounds a radial outer side of the cylinder 110 in a circumferential direction. The mixing tube 332a is disposed at one end side (an upper side of FIG. 9A) in the stroke direction of the piston 112 in relation to the scavenge ports 124, and the mixing tube 332b is disposed at the other end side (a lower side of FIG. 9A) in the stroke direction of the piston 112 in relation to the scavenge ports 124.

Annular mixing chambers are formed in the respective mixing tubes 332a and 332b. A premixed gas in which the fuel gas and the active gas are mixed is produced in the mixing chambers.

The circulation tubes 132c communicate with the mixing tube 332a, and the premixed gas including the fuel gas flowing in from the mixing tube 332a circulates therethrough. Also, the circulation tubes 132d communicate with the mixing tube 332b, and the premixed gas including the fuel gas flowing in from the mixing tube 332b circulates therethrough.

Then, when the injection valves 160 are opened and the premixed gas flows from the mixing tubes 332a and 332b into the circulation tubes 132c and 132d, the premixed gas is ejected from the injection ports 132e. Thus, the premixed gas is sprayed from the injection ports 132e of the fuel injection units 332 toward the active gas that flows from the scavenge reservoir 126 (the scavenge chamber 128) toward the scavenge ports 124.

In the aforementioned embodiment, the case in which the plurality of injection ports 132e are provided at different positions in the stroke direction of the piston 112, and the switching valves 180 that control the ejection of the premixed gas at the injection ports 132e provided for the circulation tubes 132c and the injection ports 132e provided for the circulation tubes 132d are individually provided has been described. However, the ejection of the premixed gas from the injection ports 132e provided for both of the circulation tubes 132c and 132d may be controlled by one of the switching valves 180. Also, all of the injection ports 132e may have the same positions in the stroke direction of the piston 112.

Further, in the aforementioned embodiment and the modifications, the case in which the injection ports 132e are openings that are formed in the circulation tubes 132c and 132d disposed outside the cylinder 110 in relation to the scavenge ports 124 has been described. However, the injection ports 132e may be openings that are formed in inner circumferential surfaces of the scavenge ports 124.

Further, in the aforementioned embodiment and the modifications, the case in which the ejection of the fuel gas from the plurality of injection ports 132e located in one section among the plurality of injection ports 132e divided into the four groups in the circumferential direction of the cylinder 110 is controlled by the switching of one switching valve 180 provided for the branch flow path 178 has been described. However, if the injection ports 132e are divided into two or more groups in the circumferential direction of the cylinder 110, the injection ports 132e may not be divided into four groups.

Further, in the aforementioned embodiment and the modifications, the case in which the scavenge ports 124 extend in the direction inclined with respect to the radial direction of the cylinder 110 to generate the spiral flow of the active gas in the cylinder 110 has been described. However, the scavenge ports 124 may extend in the radial direction of the cylinder 110 without being configured to generate the spiral flow.

Further, in the aforementioned embodiment and the modifications, the case in which all of the branch flow paths 178 are connected to one or the plurality of injection valves 160 that control the ejection of the premixed gas from the plurality of injection ports 132e and 232e adjacent to each other in the circumferential direction of the cylinder 110 has been described. However, at least one of the branch flow paths 178 may be connected to one or the plurality of injection valves 160 that control the ejection of the premixed gas from the plurality of injection ports 132e and 232e adjacent to each other in the circumferential direction of the cylinder 110.

In addition, in the aforementioned embodiment and the modifications, the case in which the injection valve 160 occupies the blocking position when the hydraulic pressure acts on the valve element 164 and the communicating position when no hydraulic pressure acts on the valve element 164 has been described. However, the injection valve 160 may be configured to occupy the communicating position when the hydraulic pressure acts on the valve element 164 and the blocking position when no hydraulic pressure acts on the valve element 164.

### [Industrial Applicability]

The present invention can be used in uniflow scavenging 2-cycle engines that burn a premixed gas generated by injecting a fuel gas into an active gas sucked from scavenge ports.

### [Reference Signs List]

1: uniflow scavenging 2-cycle engine
110: cylinder
112: piston
124: scavenge port
128: scavenge chamber
130: communicating path
132e, 232e: injection port
160: injection valve
168: fuel supply source
170: fuel supply path
174: hydraulic pump
176: main flow path
178: branch flow path
180: switching valve

## Claims

1. A uniflow scavenging 2-cycle engine comprising:
a cylinder (110) in which a piston (112) slides therein;
a plurality of injection ports (132e, 232e) provided apart from each other in a circumferential direction of the cylinder (110);
a fuel supply path (170) configured to connect the plurality of injection ports (132e, 232e) to a fuel supply source of a fuel gas;
a plurality of injection valves (160) provided at the fuel supply path (170) in parallel to each other, and which are configured to switch a communicating position at which the fuel supply source and the injection ports (132e, 232e) communicate with each other and the fuel gas supplied from the fuel supply source is ejected from the injection ports (132e, 232e) and a blocking position at which the communication between the fuel supply source and the injection ports (132e, 232e) is blocked and the ejection of the fuel gas from the injection ports (132e, 232e) is stopped, and thereby control the ejection of the fuel gas from the injection ports (132e, 232e);
a hydraulic pump (174) configured to discharge hydraulic oil and thereby switches the injection valves (160) to the communicating position or the blocking position;
a main flow path (176) connected to the hydraulic pump (174) and configured to guide the hydraulic oil discharged from the hydraulic pump (174);
a plurality of branch flow paths (178) which branch off from the main flow path (176) and configured to guide the hydraulic oil to one or more of the injection valves (160) from the main flow path (176); and
switching valves (180) provided at the plurality of respective branch flow paths (178), configured to supply the hydraulic oil from the main flow path (176) to the injection valves (160) or to stop the supply of the hydraulic oil from the main flow path (176) to the injection valves (160), and configured to switch the injection valves (160) to the communicating position or the blocking position,
**characterized in that** at least one of the plurality of branch flow paths (178) is connected to one or more of the injection valves (160) that control the ejection of the fuel gas from the plurality of injection ports (132e, 232e) adjacent to each other in a circumferential direction of the cylinder (110), and the ejection of the fuel gas from the plurality of injection ports (132e, 232e) adjacent to each other is controlled by switching one switching valve (180) provided at one of the branch flow paths (178).

2. The uniflow scavenging 2-cycle engine according to claim 1, wherein the injection ports (132e, 232e) eject a premixed gas in which the fuel gas and an active gas are mixed.

3. The uniflow scavenging 2-cycle engine according to claim 1, wherein the injection ports (132e) are provided at different positions in a stroke direction of the piston (112), the ejection of the fuel gas from the plurality of injection ports (132e) adjacent to each other is controlled by switching one switching valve (180) provided at one of the branch flow paths (178), and the ejection of the fuel gas from the plurality of injection ports (132e) that have the different positions in the stroke direction of the piston (112) and are adjacent to each other is controlled by switching one switching valve (180) provided at another of the branch flow paths (178).

4. The uniflow scavenging 2-cycle engine according to claim 2, wherein the injection ports (132e) are provided at different positions in a stroke direction of the piston (112), the ejection of the fuel gas from the plurality of injection ports (132e) adjacent to each other is controlled by switching one switching valve (180) provided at one of the branch flow paths (178), and the ejection of the fuel gas from the plurality of injection ports (132e) that have the different positions in the stroke direction of the piston (112) and are adjacent to each other is controlled by switching one switching valve (180) provided at another of the branch flow paths (178).

5. The uniflow scavenging 2-cycle engine according to claim 1, wherein the ejection of the fuel gas from the plurality of injection ports (132e, 232e) located in one section among the plurality of injection ports (132e, 232e) divided into the four sections in the circumferential direction of the cylinder (110) is controlled by the switching of one switching valve (180) provided at one of the branch flow paths (178).

6. The uniflow scavenging 2-cycle engine according to claim 2, wherein the ejection of the fuel gas from the plurality of injection ports (132e, 232e) located in one section among the plurality of injection ports (132e, 232e) divided into the four sections in the circumferential direction of the cylinder (110) is controlled by the switching of one switching valve (180) provided at one of the branch flow paths (178).

7. The uniflow scavenging 2-cycle engine according to claim 3, wherein the ejection of the fuel gas from the plurality of injection ports (132e) located in one section among the plurality of injection ports (132e) divided into the four sections in the circumferential direction of the cylinder (110) is controlled by the switching of one switching valve (180) provided at one of the branch flow paths (178).

8. The uniflow scavenging 2-cycle engine according to claim 4, wherein the ejection of the fuel gas from the plurality of injection ports (132e) located in one section among the plurality of injection ports (132e) divided into the four sections in the circumferential direction of the cylinder (110) is controlled by the switching of one switching valve (180) provided at one of the branch flow paths (178).

9. The uniflow scavenging 2-cycle engine according to claim 5, further comprising a scavenge chamber (128) in which the cylinder (110) is disposed and a communicating path (130) configured to guide an active gas from a radial outer side of the scavenge chamber (128) into the scavenge chamber (128).

10. The uniflow scavenging 2-cycle engine according to claim 6, further comprising a scavenge chamber (128) in which the cylinder (110) is disposed and a communicating path (130) configured to guide the active gas from a radial outer side of the scavenge chamber (128) into the scavenge chamber (128).

11. The uniflow scavenging 2-cycle engine according to claim 7, further comprising a scavenge chamber (128) in which the cylinder (110) is disposed and a communicating path (130) configured to guide an active gas from a radial outer side of the scavenge chamber (128) into the scavenge chamber (128).

12. The uniflow scavenging 2-cycle engine according to claim 8, further comprising a scavenge chamber (128) in which the cylinder (110) is disposed and a communicating path (130) configured to guide the active gas from a radial outer side of the scavenge chamber (128) into the scavenge chamber (128).

13. The uniflow scavenging 2-cycle engine according to claim 9, further comprising scavenge ports (124) that are provided in the cylinder (110) and extend in a direction inclined with respect to a radial direction of the cylinder (110) to force the active gas to flow into the cylinder (110) and to generate a spiral flow of the active gas in the cylinder (110), wherein the injection ports (132e, 232e) are provided in inner walls of the scavenge ports (124) or outer sides of the scavenge ports (124), and the plurality of injection ports (132e, 232e) located in one section facing the communicating path (130) are disposed at a downstream side in a flow direction of the spiral flow in a greater number than at an upstream side in the flow direction of the spiral flow with respect to a center adjustment position of a flow path width of the communicating path (130).

14. The uniflow scavenging 2-cycle engine according to claim 10, further comprising scavenge ports (124) that are provided in the cylinder (110) and extend in a direction inclined with respect to a radial direction of the cylinder (110) to force the active gas to flow into the cylinder (110) and to generate a spiral flow of the active gas in the cylinder (110), wherein the injection ports (132e, 232e) are provided in inner walls of the scavenge ports (124) or outer sides of the scavenge ports (124), and the plurality of injection ports (132e, 232e) located in one section facing the communicating path (130) are disposed at a downstream side in a flow direction of the spiral flow in a greater number than at an upstream side in the flow direction of the spiral flow with respect to a center adjustment position of a flow path width of the communicating path (130).

15. The uniflow scavenging 2-cycle engine according to claim 11, further comprising scavenge ports (124) that are provided in the cylinder (110) and extend in a direction inclined with respect to a radial direction of the cylinder (110) to force the active gas to flow into the cylinder (110) and to generate a spiral flow of the active gas in the cylinder (110), wherein the injection ports (132e) are provided in inner walls of the scavenge ports (124) or outer sides of the scavenge ports (124), and the plurality of injection ports (132e) located in one section facing the communicating path (130) are disposed at a downstream side in a flow direction of the spiral flow in a greater number than at an upstream side in the flow direction of the spiral flow with respect to a center adjustment position of a flow path width of the communicating path (130).

16. The uniflow scavenging 2-cycle engine according to claim 12, further comprising scavenge ports (124) that are provided in the cylinder (110) and extend in a direction inclined with respect to a radial direction of the cylinder (110) to force the active gas to flow into the cylinder (110) and to generate a spiral flow of the active gas in the cylinder (110), wherein the injection ports (132e) are provided in inner walls of the scavenge ports (124) or outer sides of the scavenge ports (124), and the plurality of injection ports (132e) located in one section facing the communicating path (130) are disposed at a downstream side in a flow direction of the spiral flow in a greater number than at an upstream side in the flow direction of the spiral flow with respect to a center adjustment position of a flow path width of the communicating path (130).

## Patentansprüche

1. Zweitaktmaschine mit Gleichstromspülung, die Folgendes aufweist:
einen Zylinder (110), in dem ein Kolben (112) gleitet;
eine Vielzahl von Einspritzöffnungen (132e, 232e), die in einer Umfangsrichtung des Zylinders (110) getrennt voneinander vorgesehen sind;
einen Kraftstoffzuführpfad (170), der gestaltet ist, um die Vielzahl von Einspritzöffnungen (132e, 232e) mit einer Kraftstoffzuführquelle eines Brenngases zu verbinden;
eine Vielzahl von Einspritzventilen (160), die an dem Kraftstoffzuführpfad (170) parallel zueinander vorgesehen sind und die gestaltet sind, um eine Verbindungsposition, an der die Kraftstoffzuführquelle und die Einspritzöffnungen (132e, 232e) miteinander in Verbindung stehen und das von der Kraftstoffzuführquelle zugeführte Brenngas von den Einspritzöffnungen (132e, 232e) ausgestoßen wird, und eine Sperrposition zu wechseln, an der die Verbindung zwischen der Kraftstoffzuführquelle und den Einspritzöffnungen (132e, 232e) versperrt ist und der Ausstoß von Brenngas von den Einspritzöffnungen (132e, 232e) angehalten ist, und dadurch den Ausstoß von Brenngas von den Einspritzöffnungen (132e, 232e) steuern;
eine Hydraulikpumpe (174), die gestaltet ist, um Hydrauliköl auszustoßen, und die dadurch die Einspritzventile (160) auf die Verbindungsposition oder die Sperrposition umschält;
einen Hauptströmungspfad (176), der mit der Hydraulikpumpe (174) verbunden ist und gestaltet ist, um das von der Hydraulikpumpe (174) ausgestoßene Hydrauliköl zu führen;
eine Vielzahl von Zweigströmungspfaden (178), die von dem Hauptströmungspfad (176) abzweigen und gestaltet sind, um das Hydrauliköl einem oder mehreren von den Einspritzventilen (160) von dem Hauptströmungspfad (176) zuzuführen; und
Umschaltventile (180), die an der Vielzahl der jeweiligen Zweigströmungspfade (178) vorgesehen sind, die gestaltet sind, um das Hydrauliköl von dem Hauptströmungspfad (176) den Einspritzventilen (160) zuzuführen oder um die Zufuhr des Hydrauliköls von dem Hauptströmungspfad (176) zu den Einspritzventilen (160) anzuhalten, und gestaltet sind, um die Einspritzventile (160) auf die Verbindungsposition oder die Sperrposition umzuschalten,
**dadurch gekennzeichnet, dass** mindestens einer von der Vielzahl von Zweigströmungspfaden (178) mit einem oder mehreren von den Einspritzventilen (160) verbunden ist, die den Ausstoß von Brenngas von der Vielzahl von Einspritzöffnungen (132e, 232e) steuern, die in einer Umfangsrichtung des Zylinders (110) benachbart zueinander sind, und den Ausstoß des Brenngases von der Vielzahl von Einspritzöffnungen (132e, 232e), die benachbart zueinander sind, durch Umschalten eines Umschaltventils (180) gesteuert wird, das an dem einen der Zweigströmungspfade (178) vorgesehen ist.

2. Zweitaktmaschine mit Gleichstromspülung gemäß Anspruch 1, wobei die Einspritzöffnungen (132e, 232e) ein vorgemischtes Gas ausstoßen, in dem das Brenngas und ein Aktivgas gemischt sind.

3. Zweitaktmaschine mit Gleichstromspülung gemäß Anspruch 1, wobei die Einspritzöffnungen (132e) an verschiedenen Positionen in einer Hubrichtung des Kolbens (112) vorgesehen sind, der Ausstoß des Brenngases von der Vielzahl von Einspritzöffnungen (132e), die benachbart zueinander sind, durch Umschalten eines Umschaltventils (180) gesteuert wird, das an einem der Zweigströmungspfade (178) vorgesehen ist, und der Ausstoß des Brenngases von der Vielzahl von Einspritzöffnungen (132e), die die verschiedenen Positionen in der Hubrichtung des Kolben (112) haben und zueinander benachbart sind, durch Umschalten eines Umschaltventils (180) gesteuert wird, das an einem anderen der Zweigströmungspfade (178) vorgesehen ist.

4. Zweitaktmaschine mit Gleichstromspülung gemäß Anspruch 2, wobei die Einspritzöffnungen (132e) an verschiedenen Positionen in einer Hubrichtung des Kolbens (112) vorgesehen sind, der Ausstoß des Brenngases von der Vielzahl von Einspritzöffnungen (132e), die benachbart zueinander sind, durch Umschalten eines Umschaltventils (180) gesteuert wird, das an einem der Zweigströmungspfade (178) vorgesehen ist, und der Ausstoß des Brenngases von der Vielzahl von Einspritzöffnungen (132e), die die verschiedenen Positionen in der Hubrichtung des Kolben (112) haben und benachbart zueinander sind, durch Umschalten eines Umschaltventils (180) gesteuert wird, das an einem anderen der Zweigströmungspfade (178) vorgesehen ist.

5. Zweitaktmaschine mit Gleichstromspülung gemäß Anspruch 1, wobei der Ausstoß des Brenngases von der Vielzahl von Einspritzöffnungen (132e, 232e), die in einem Abschnitt unter der Vielzahl von Einspritzöffnungen (132e, 232e) gelegen sind, die in die vier Abschnitte in der Umfangsrichtung des Zylinders (110) aufgeteilt sind, durch das Umschalten eines Umschaltventils (180) gesteuert wird, das an einem der Zweigströmungspfade (178) vorgesehen ist.

6. Zweitaktmaschine mit Gleichstromspülung gemäß Anspruch 2, wobei der Ausstoß des Brenngases von der Vielzahl von Einspritzöffnungen (132e, 232e), die in einem Abschnitt unter der Vielzahl von Einspritzöffnungen (132e, 232e) gelegen sind, die in die vier Abschnitte in der Umfangsrichtung des Zylinders (110) aufgeteilt sind, durch das Umschalten eines Umschaltventils (180) gesteuert wird, das an einem der Zweigströmungspfade (178) vorgesehen ist.

7. Zweitaktmaschine mit Gleichstromspülung gemäß Anspruch 3, wobei der Ausstoß des Brenngases von der Vielzahl von Einspritzöffnungen (132e), die in einem Abschnitt unter der Vielzahl von Einspritzöffnungen (132e) gelegen sind, die in die vier Abschnitte in der Umfangsrichtung des Zylinders (110) aufgeteilt sind, durch das Umschalten eines Umschaltventils (180) gesteuert wird, das an einem der Zweigströmungspfade (178) vorgesehen ist.

8. Zweitaktmaschine mit Gleichstromspülung gemäß Anspruch 4, wobei der Ausstoß des Brenngases von der Vielzahl von Einspritzöffnungen (132e), die in einem Abschnitt unter der Vielzahl von Einspritzöffnungen (132e) gelegen sind, die in die vier Abschnitte in der Umfangsrichtung des Zylinders (110) aufgeteilt sind, durch das Umschalten eines Umschaltventils (180) gesteuert wird, das an einem der Zweigströmungspfade (178) vorgesehen ist.

9. Zweitaktmaschine mit Gleichstromspülung gemäß Anspruch 5, des Weiteren mit einer Spülkammer (128), in der der Zylinder (110) angeordnet ist, und einem Verbindungspfad (130), der gestaltet ist, um ein Aktivgas von einer radial äußeren Seite der Spülkammer (128) in die Spülkammer (128) zu führen.

10. Zweitaktmaschine mit Gleichstromspülung gemäß Anspruch 6, des Weiteren mit einer Spülkammer (128), in der der Zylinder (110) angeordnet ist, und einem Verbindungspfad (130), der gestaltet ist, um das Aktivgas von einer radial äußeren Seite der Spülkammer (128) in die Spülkammer (128) zu führen.

11. Zweitaktmaschine mit Gleichstromspülung gemäß Anspruch 7, des Weiteren mit einer Spülkammer (128), in der der Zylinder (110) angeordnet ist, und einem Verbindungspfad (130), der gestaltet ist, um ein Aktivgas von einer radial äußeren Seite der Spülkammer (128) in die Spülkammer (128) zu führen.

12. Zweitaktmaschine mit Gleichstromspülung gemäß Anspruch 8, des Weiteren mit einer Spülkammer (128), in der der Zylinder (110) angeordnet ist, und einem Verbindungspfad (130), der gestaltet ist, um das Aktivgas von einer radial äußeren Seite der Spülkammer (128) in die Spülkammer (128) zu führen.

13. Zweitaktmaschine mit Gleichstromspülung gemäß Anspruch 9, des Weiteren mit Spülöffnungen (124), die in dem Zylinder (110) vorgesehen sind und sich in eine Richtung erstrecken, die bezüglich einer Radialrichtung des Zylinders (110) geneigt ist, um zu erzwingen, dass das Aktivgas in den Zylinder (110) strömt, und um eine spiralförmige Strömung des Aktivgases in dem Zylinder (110) zu erzeugt, wobei die Einspritzöffnungen (132e, 232e) in Innenwänden der Spülöffnungen (124) oder Außenseiten der Spülöffnungen (124) vorgesehen sind und die Vielzahl von Einspritzöffnungen (132e, 232e), die in einem Abschnitt gelegen sind, der dem Verbindungspfad (130) zugewandt ist, an einer stromabwärts gelegenen Seite in einer Strömungsrichtung der spiralförmigen Strömung in einer größeren Anzahl als an einer stromaufwärts gelegenen Seite in der Strömungsrichtung der Spiralströmung bezüglich einer Mitteleinstellposition einer Strömungspfadbreite des Verbindungspfads (130) angeordnet sind.

14. Zweitaktmaschine mit Gleichstromspülung gemäß Anspruch 10, des Weiteren mit Spülöffnungen (124), die in dem Zylinder (110) vorgesehen sind und sich in eine Richtung erstrecken, die bezüglich einer Radialrichtung des Zylinders (110) geneigt ist, um zu erzwingen, dass das Aktivgas in den Zylinder (110) strömt, und um eine spiralförmige Strömung des Aktivgases in dem Zylinder (110) zu erzeugt, wobei die Einspritzöffnungen (132e, 232e) in Innenwänden der Spülöffnungen (124) oder Außenseiten der Spülöffnungen (124) vorgesehen sind und die Vielzahl von Einspritzöffnungen (132e, 232e), die in einem Abschnitt gelegen sind, der dem Verbindungspfad (130) zugewandt ist, an einer stromabwärts gelegenen Seite in einer Strömungsrichtung der spiralförmigen Strömung in einer größeren Anzahl als an einer stromaufwärts gelegenen Seite in der Strömungsrichtung der Spiralströmung bezüglich einer Mitteleinstellposition einer Strömungspfadbreite des Verbindungspfads (130) angeordnet sind.

15. Zweitaktmaschine mit Gleichstromspülung gemäß Anspruch 11, des Weiteren mit Spülöffnungen (124), die in dem Zylinder (110) vorgesehen sind und sich in eine Richtung erstrecken, die bezüglich einer Radialrichtung des Zylinders (110) geneigt ist, um zu erzwingen, dass das Aktivgas in den Zylinder (110) strömt, und um eine spiralförmige Strömung des Aktivgases in dem Zylinder (110) zu erzeugt, wobei die Einspritzöffnungen (132e) in Innenwänden der Spülöffnungen (124) oder Außenseiten der Spülöffnungen (124) vorgesehen sind und die Vielzahl von Einspritzöffnungen (132e), die in einem Abschnitt gelegen sind, der dem Verbindungspfad (130) zugewandt ist, an einer stromabwärts gelegenen Seite in einer Strömungsrichtung der spiralförmigen Strömung in einer größeren Anzahl als an einer stromaufwärts gelegenen Seite in der Strömungsrichtung der Spiralströmung bezüglich einer Mitteleinstellposition einer Strömungspfadbreite des Verbindungspfads (130) angeordnet sind.

16. Zweitaktmaschine mit Gleichstromspülung gemäß Anspruch 12, des Weiteren mit Spülöffnungen (124), die in dem Zylinder (110) vorgesehen sind und sich in eine Richtung erstrecken, die bezüglich einer Radialrichtung des Zylinders (110) geneigt ist, um zu erzwingen, dass das Aktivgas in den Zylinder (110) strömt, und um eine spiralförmige Strömung des Aktivgases in dem Zylinder (110) zu erzeugt, wobei die Einspritzöffnungen (132e) in Innenwänden der Spülöffnungen (124) oder Außenseiten der Spülöffnungen (124) vorgesehen sind und die Vielzahl von Einspritzöffnungen (132e), die in einem Abschnitt gelegen sind, der dem Verbindungspfad (130) zugewandt ist, an einer stromabwärts gelegenen Seite in einer Strömungsrichtung der spiralförmigen Strömung in einer größeren Anzahl als an einer stromaufwärts gelegenen Seite in der Strömungsrichtung der Spiralströmung bezüglich einer Mitteleinstellposition einer Strömungspfadbreite des Verbindungspfads (130) angeordnet sind.

## Revendications

1. Un moteur à deux temps à balayage uniforme comprenant:
un cylindre (110) dans lequel un piston (112) coulisse;
une pluralité d'orifices d'injection (132e, 232e) prévus de manière séparée l'un de l'autre dans une direction circonférentielle du cylindre (110);
un chemin d'alimentation de combustible (170) configuré pour connecter la pluralité d'orifices d'injection (132e, 232e) à une source d'alimentation de combustible;
une pluralité de soupapes d'injection (160) prévues au chemin d'alimentation de combustible (170) en parallèle l'une par rapport à l'autre, et qui sont configurées pour commuter une position de communication, à laquelle la source d'alimentation de combustible et les orifices d'injection (132e, 232e) communiquent l'une avec les autres et le gaz combustible alimenté depuis la source d'alimentation de combustible est éjecté des orifices d'injection (132e, 232e), et une position de blocage à laquelle la communication entre la source d'alimentation de combustible et les orifices d'injection (132e, 232e) est bloquée et l'éjection de gaz combustible depuis les orifices d'injection (132e, 232e) est arrêtée, et par cela contrôlent l'éjection du gaz combustible depuis les orifices d'injection (132e, 232e);
une pompe hydraulique (174) configurée pour décharger de l'huile hydraulique et qui commute par cela les soupapes d'injection (160) entre la position de communication et la position de blocage;
un chemin principal d'écoulement (176) connecté à la pompe hydraulique (174) et configuré à guider l'huile hydraulique déchargée depuis la pompe hydraulique (174);
une pluralité de chemins d'écoulement bifurquées (178) qui bifurquent du chemin principal d'écoulement (176) et qui sont configurés pour guider l'huile hydraulique à une ou plusieurs des soupapes d'injection (160) à partir du chemin principal d'écoulement (176); et
des soupapes de commutation (180) prévues à la pluralité des respectives chemins d'écoulement bifurquées (178), configurées pour alimenter l'huile hydraulique du chemin principal d'écoulement (176) aux soupapes d'injection (160) ou pour arrêter l'alimentation d'huile hydraulique à partir du chemin principal d'écoulement (176) aux soupapes d'injection (160), et configurées pour commuter les soupapes d'injection (160) entre la position de communication et la position de blocage,
**caractérisé en ce qu'**au moins un chemin de la pluralité de chemins d'écoulement bifurquées (178) est connecté avec une ou plusieurs des soupapes d'injection (160) qui contrôlent l'éjection du gaz combustible depuis la pluralité d'orifices d'injection (132e, 232e) adjacents l'un par rapport à l'autre dans une direction circonférentielle du cylindre (110), et l'éjection du gaz combustible de la pluralité d'orifices d'injection (132e, 232e) adjacents l'un par rapport à l'autre est contrôlée par commutation d'une soupape de commutation (180) prévue à un des chemins d'écoulement bifurquées (178).

2. Le moteur à deux temps à balayage uniforme selon la revendication 1, les orifices d'injection (132e, 232e) éjectant un gaz pré-mélangé dans lequel le gaz combustible et un gaz actif sont mélangés.

3. Le moteur à deux temps à balayage uniforme selon la revendication 1, les orifices d'injection (132e) étant prévus à des positions différentes dans une direction de course du piston (112), l'éjection de gaz combustible de la pluralité d'orifices d'injection (132e) adjacents l'un par rapport à l'autre étant contrôlée en commutant une soupape de commutation (180) prévue à un des chemins d'écoulement bifurquées (178), et l'éjection de gaz combustible depuis la pluralité d'orifices d'injection (132e), qui ont les positions différentes dans la direction de course du piston (112) et qui sont adjacents l'un par rapport à l'autre, étant contrôlée en commutant une soupape de commutation (180) prévue à un autre chemin des chemins d'écoulement bifurquées (178).

4. Le moteur à deux temps à balayage uniforme selon la revendication 2, les orifices d'injection (132^{e}) étant prévus à des positions différentes dans une direction de course du piston (112), l'éjection du gaz combustible de la pluralité d'orifices d'injection (132e) qui sont adjacents l'un par rapport à l'autre étant contrôlée en commutant une soupape de commutation (180) prévue à un chemin des chemins d'écoulement bifurquées (178), et l'éjection de gaz combustible de la pluralité d'orifices d'injection (132e), qui ont les positions différentes dans la direction de course du piston (112) et qui sont adjacents l'un par rapport à l'autre, étant contrôlée en commutant une soupape de commutation (180) prévue à un autre chemin des chemins d'écoulement bifurquées (178).

5. Le moteur à deux temps à balayage uniforme selon la revendication 1, l'éjection du gaz combustible de la pluralité d'orifices d'injection (132e, 232e) situés dans une section parmi la pluralité d'orifices d'injection (132e, 232e) divisés dans les quatre sections dans la direction circonférentielle du cylindre (110) étant contrôlée par la commutation d'une soupape de commutation (180) prévue à l'un des chemins d'écoulement bifurquées (178).

6. Le moteur à deux temps à balayage uniforme selon la revendication 2, l'éjection du gaz combustible de la pluralité d'orifices d'injection (132e, 232e) situés dans une section parmi la pluralité d'orifices d'injection (132e, 232e) divisés dans les quatre sections dans la direction circonférentielle du cylindre (110) étant contrôlée par la commutation d'une soupape de commutation (180) prévue à l'un des chemins d'écoulement bifurquées (178).

7. Le moteur à deux temps à balayage uniforme selon la revendication 3, l'éjection du gaz combustible de la pluralité d'orifices d'injection (132e) situés dans une section parmi la pluralité d'orifices d'injection (132e) divisés dans les quatre sections dans la direction circonférentielle du cylindre (110) étant contrôlée par la commutation d'une soupape de commutation (180) prévue à l'un des chemins d'écoulement bifurquées (178).

8. Le moteur à deux temps à balayage uniforme selon la revendication 4, l'éjection du gaz combustible de la pluralité d'orifices d'injection (132e) situés dans une section parmi la pluralité d'orifices d'injection (132e) divisés dans les quatre sections dans la direction circonférentielle du cylindre (110) étant contrôlée par la commutation d'une soupape de commutation (180) prévue à l'un des chemins d'écoulement bifurquées (178).

9. Le moteur à deux temps à balayage uniforme selon la revendication 5, comprenant en outre une chambre de balayage (128) dans laquelle le cylindre (110) est situé et un chemin de communication (130) configuré à guider un gaz actif à partir d'un côté extérieur radial de la chambre de balayage (128) dans la chambre de balayage (128).

10. Le moteur à deux temps à balayage uniforme selon la revendication 6, comprenant en outre une chambre de balayage (128) dans laquelle le cylindre (110) est situé et un chemin de communication (130) configuré à guider le gaz actif à partir d'un côté extérieur radial de la chambre de balayage (128) dans la chambre de balayage (128).

11. Le moteur à deux temps à balayage uniforme selon la revendication 7, comprenant en outre une chambre de balayage (128) dans laquelle le cylindre (110) est situé et un chemin de communication (130) configuré à guider un gaz actif à partir d'un côté extérieur radial de la chambre de balayage (128) dans la chambre de balayage (128).

12. Le moteur à deux temps à balayage uniforme selon la revendication 8, comprenant en outre une chambre de balayage (128) dans laquelle le cylindre (110) est situé et un chemin de communication (130) configuré à guider le gaz actif à partir d'un côté extérieur radial de la chambre de balayage (128) dans la chambre de balayage (128).

13. Le moteur à deux temps à balayage uniforme selon la revendication 9, comprenant en outre des orifices de balayage (124) prévues dans le cylindre (110) et s'étendant dans une direction inclinée par rapport à une direction radiale du cylindre (110) afin de forcer le gaz actif à s'écouler dans le cylindre (110) et de générer un écoulement en spirale du gaz actif dans le cylindre (110), les orifices d'injection (132e, 232e) étant prévues dans des parois intérieures des orifices de balayage (124) ou des côtés extérieurs des orifices de balayage (124), et la pluralité des orifices d'injection (132e, 232e) situés dans une section en face du chemin de communication (130) étant disposé d'un côté en aval dans une direction d'écoulement de l'écoulement en spirale dans un nombre supérieur que d'un côté en amont dans une direction d'écoulement de l'écoulement en spirale par rapport à une position d'ajustage centrale d'une épaisseur d'un chemin d'écoulement du chemin de communication (130).

14. Le moteur à deux temps à balayage uniforme selon la revendication 10, comprenant en outre des orifices de balayage (124) prévues dans le cylindre (110) et s'étendant dans une direction inclinée par rapport à une direction radiale du cylindre (110) afin de forcer le gaz actif à s'écouler dans le cylindre (110) et de générer un écoulement en spirale du gaz actif dans le cylindre (110), les orifices d'injection (132e, 232e) étant prévues dans des parois intérieures des orifices de balayage (124) ou des côtés extérieurs des orifices de balayage (124), et la pluralité des orifices d'injection (132e, 232e) situés dans une section en face du chemin de communication (130) étant disposés d'un côté en aval dans une direction d'écoulement de l'écoulement en spirale dans un nombre supérieur que d'un côté en amont dans la direction d'écoulement de l'écoulement en spirale par rapport à une position d'ajustage centrale d'une épaisseur d'un chemin d'écoulement du chemin de communication (130).

15. Le moteur à deux temps à balayage uniforme selon la revendication 11, comprenant en outre des orifices de balayage (124) prévues dans le cylindre (110) et s'étendant dans une direction inclinée par rapport à une direction radiale du cylindre (110) afin de forcer le gaz actif à s'écouler dans le cylindre (110) et de générer un écoulement en spirale du gaz actif dans le cylindre (110), les orifices d'injection (132e, 232e) étant prévues dans des parois intérieures des orifices de balayage (124) ou des côtés extérieurs des orifices de balayage (124), et la pluralité des orifices d'injection (132e) situés dans une section en face du chemin de communication (130) étant disposés d'un côté en aval dans une direction d'écoulement de l'écoulement en spirale dans un nombre supérieur que d'un côté en amont dans la direction d'écoulement de l'écoulement en spirale par rapport à une position d'ajustage centrale d'une épaisseur d'un chemin d'écoulement du chemin de communication (130).

16. Le moteur à deux temps à balayage uniforme selon la revendication 12, comprenant en outre des orifices de balayage (124) prévues dans le cylindre (110) et s'étendant dans une direction inclinée par rapport à une direction radiale du cylindre (110) afin de forcer le gaz actif à s'écouler dans le cylindre (110) et de générer un écoulement en spirale du gaz actif dans le cylindre (110), les orifices d'injection (132e) étant prévues dans des parois intérieures des orifices de balayage (124) ou des côtés extérieurs des orifices de balayage (124), et la pluralité des orifices d'injection (132e) situés dans une section en face du chemin de communication (130) étant disposés d'un côté en aval dans une direction d'écoulement de l'écoulement en spirale dans un nombre supérieur que d'un côté en amont dans une direction d'écoulement de l'écoulement en spirale par rapport à une position d'ajustage centrale d'une épaisseur d'un chemin d'écoulement du chemin de communication (130).
